# EUROPEAN PATENT SPECIFICATION

(11) **EP 3 317 942 B1**
(45) Date of publication and mention of the grant of the patent: **18.03.2020**
(21) Application number: 16818331.7
(22) Date of filing: 14.06.2016
(51) Int. Cl.: H02J 7/35, H02S 40/38, H01R 13/625

(54) **MODULAR ENERGY HARVESTING DEVICE**
MODULARE ENERGIEGEWINNUNGSVORRICHTUNG
DISPOSITIF DE RÉCOLTE D'ÉNERGIE MODULAIRE

(30) Priority: 30.06.2015 SE 1550918
(43) Date of publication of application: 09.05.2018
(73) Proprietor: Sundaya Nordic AB, 431 37 Mölndal (SE)
(72) Inventor: ADEMA, Maurice Raymond, Bogor, Jawa Barat 16810 (ID)
(74) Representative: Kransell & Wennborg KB
(86) International application number: PCT/SE2016/050575
(87) International publication number: WO 2017/003345

(56) References cited:
- WO-A1-2013/017826
- WO-A2-2007/071968
- US-A1- 2005 161 079
- US-A1- 2008 151 545
- US-A1- 2009 038 673
- US-A1- 2012 000 503
- US-A1- 2012 000 503
- US-A1- 2015 155 414
- US-B1- 7 021 787

## Description

### Field of the Invention

The present invention relates to a modular energy harvesting device comprising a light-to-electricity converting module, and an energy storage module.

### Background of the Invention

Everywhere in the world, people use, or desire to use, electrical energy for, for example, illumination, communication, and entertainment (such as television and radio).

In particular in developing countries or remote areas, where adequate infrastructure for generation and supply of electrical energy may not exist, electrical energy may currently be provided by small gensets or similar, in which costly and environmentally unsound fossil fuel is burned to generate electrical energy. Alternatively, or in combination, some functions such as illumination and cooking may be provided through direct combustion of fuel.

One advantageous way of providing electrical energy for performing the above and other functions is to harvest solar energy using a light to electricity converter. A light-to-electricity converter may typically comprise one or several solar cells and circuitry for conditioning the electrical energy to be suitable for a receiver of the electrical energy.

Many of the functions listed above do not necessarily take place at the time when the sun is shining or at the same location as the light-to-electricity converter, but various functions may require portability. This can be solved by using the light-to-electricity converter for charging a rechargeable battery or other energy storage device, and using the electrical energy stored in the battery at a later time and/or at a different location.

In existing solutions for storing electrical energy resulting from sunlight that has been harvested and converted by a light-to-electricity converter in a portable battery, the battery is typically connected to the light-to-electricity converter via a cable. This is not very convenient, as it may require the user of the electrical energy to provide and carry around a cable in addition to the energy storage device. If the cable is lost, forgotten or damaged, the battery cannot be recharged.

In other existing solutions, the light-to-electricity converter and the energy storage device are combined in a unit, which is brought along when the stored energy is to be used at a different location. To solve the problem of limited battery life and inflexible energy storing capacity, US 2013/0134921 proposes a portable solar power supply including a solar charger and battery cells that can be stacked and attached to the solar charger to allow replacement of battery cells and adaptation to different needs for energy storing capacity.

The above-described existing solutions for harvesting and storing energy from the sun have different drawbacks, and it would therefore be desirable to provide for improved harvesting and storing of energy from the sun. In particular, it would be desirable to provide for a more user-friendly and convenient way of harvesting and storing solar energy for portable/remote use.

US 2012/0000503 relates to a power brick assembly including a solar energy collecting plate carried on a carrier for collecting solar energy to generate electrical energy.

US 2005/0161079 relates to a system and apparatus for charging an electronic device using solar energy.

### Summary

In view of above-mentioned and other drawbacks of the prior art, it is an object of the present invention to provide for improved harvesting and storing of energy from the sun, in particular to provide for a more user-friendly and convenient way of harvesting and storing solar energy for portable/remote use.

According to the present invention, it is therefore provided a modular energy harvesting device comprising: a light-to-electricity converter module including: a light-to-electricity converting device for receiving sunlight and converting the sunlight to electricity, the light-to-electricity converting device defining a light-to-electricity converting device plane; and a first connection portion comprising a first electrical connector being electrically connected to the light-to-electricity converting device to allow flow of electrical current from the light-to-electricity converting device via the first electrical connector; and an elongated energy storage module having a longitudinal axis, the energy storage module including: an energy storage device for storing electrical energy; and a second connection portion for releasable mechanical and electrical connection to the first connection portion of the light-to-electricity converter module, the second connection portion comprising a second electrical connector being electrically connected to the energy storage device to allow flow of electrical current from the light-to-electricity converting device of the light-to-electricity converter module to the energy storage device by means of electrical connection formed between the first electrical connector of the light-to-electricity converter module and the second electrical connector of the energy storage module, wherein the first connection portion of the light-to-electricity converter module and the second connection portion of the energy storage module are configured in such a way that the longitudinal axis of the energy storage module is substantially perpendicular to the light-to-electricity converting device plane of the light-to-electricity converter module when the energy storage module is attached to the light-to-electricity converter module.

The light-to-electricity converting device may be any component capable of directly or indirectly converting light to electricity. For instance, the light-to-electricity converting device may be formed by one or several photovoltaic cell(s).

The energy storage device may be any device capable of storing energy and providing the stored energy in the form of electrical energy. The energy storage device may comprise a rechargeable battery. Alternatively, or in addition, the energy storage device may comprise, for example, a capacitor, a supercapacitor, a flywheel, or a fuel cell.

The present invention is based on the realization that recent advances in energy storage technology can be used to provide for universal access to electrical energy and the various functions accessible through the use of electrical energy.

The present inventor has further realized that modularity, ease-of-use, reliability, and affordability are critical factors for successfully providing for universal access to electrical energy and associated functions.

Through embodiments of the present invention, a modular energy harvesting device is provided that allows easy attachment and detachment of the energy storage module to the light-to-electricity converter module, so that the energy storage module can easily be brought along and connected to an light-to-electricity converter module, to together form a modular energy harvesting device. The harvested energy is stored in the energy storage module. By connecting the energy storage module to another function-providing module, a functional electrical device can be formed for providing, for example, one of the functions mentioned above, such as illumination.

Moreover, the substantially perpendicular arrangement of the energy storage module in relation to the light-to-electricity converter module, when the energy storage module is attached to the light-to-electricity converter module, allows the energy storage module to function as a support for directing the light-to-electricity converting device of the light-to-electricity converter module towards the sun.

A further effect of the perpendicular arrangement of the elongated energy storage module, when the energy storage module comprises a battery, is that the battery area exposed to radiated heat through the light-to-electricity converting device is minimized. This provides for an extended battery life as compared to prior art solutions in which the battery is arranged in parallel with the solar panel surface plane.

The light-to-electricity converter module may comprise a housing at least enclosing a backside of the light-to-electricity converting device, and at least a portion of the first connection portion may be provided as an integral part of the housing. For instance, the housing may be formed of plastic.

Furthermore, the light-to-electricity converter module may have a polygonal shape with different distances between the first connection portion and the different edges. Hereby, the light-to-electricity converting device may be arranged at different angles towards the sun by resting the modular energy harvesting device on the distal end of the energy storage module and a selected edge of the light-to-electricity converter module. The different possible inclinations of the light-to-electricity converting device in relation to the surface on which it is resting are defined by the distances between the first connection portion and the different edges, and the length of the elongated energy storage module.

According to embodiments of the present invention, one of the first connection portion comprised in the light-to-electricity converter module, and the second connection portion comprised in the energy storage module may be a male connection portion and the other one of the first connection portion comprised in the light-to-electricity converter module, and the second connection portion comprised in the energy storage module may be a female connection portion. The male connection portion and the female connection portion may be configured to allow the female connection portion to axially receive the male connection portion and to lock the male connection portion and the female connection portion together through rotation of the energy storage module in relation to the light-to-electricity converter module.

In these embodiments, the energy storage module can easily and intuitively be detached from the light-to-electricity converter module, and be attached to (and later detached from) a function-providing module providing another electrical function, so that the energy storage module can be moved between different function-providing modules as desired.

For ease of use of the modular energy harvesting device, the male connection portion of the energy storage module and the female connection portion of the light-to-electricity converter module may advantageously be configured to lock the male connection portion and the female connection portion together through rotation of the energy storage module in relation to the light-to-electricity converter module by less than 180°, and even more preferably through rotation by less than 90°.

To provide for convenient and reliable mechanical and electrical connection, one of the first electrical connector and the second electrical connector may comprise a planar conductor pattern formed by at least a first electrode surface and a second electrode surface electrically separated from the first electrode surface, and the other one of the first electrical connector and the second electrical connector may comprise a first and a second spring-loaded connector pin; and the male connection portion and the female connection portion may be configured in such a way that the rotation to lock the male connection portion and the female connection portion together results in the first connector pin being in electrical connection with the first electrode surface, and the second connector pin being in electrical connection with the second electrode surface.

According to various embodiments of the present invention, one of the male connection portion and the female connection portion may comprise at least a first peripheral protrusion and the other one of the male connection portion and the female connection portion may comprise at least a first guiding track for accommodating the first peripheral protrusion and defining a possible relative movement between the male connection portion and the female connection portion, at least comprising rotation around a rotational axis for locking the male connection portion and the female connection portion together.

To guide the user and to provide for intuitive and robust mating of the energy storage module and the light-to-electricity converter module, the first peripheral protrusion may advantageously be shaped as a triangle with one altitude of said triangle being substantially parallel with said rotational axis.

Advantageously, the vertex (which may be rounded) of the first peripheral protrusion may be pointing (along its altitude) towards "the other" module. Thus, in embodiments where the first peripheral protrusion is comprised in the energy storage module, the vertex may be towards the light-to-electricity converter module, and *vice versa.*

The first guiding track for receiving and locking the first peripheral protrusion may advantageously comprise a first portion oriented in parallel with the rotational axis, and a second portion oriented perpendicular to the rotational axis.

The first portion of the first guiding track may "open up" to facilitate insertion of the first peripheral recess. Accordingly, the first portion of the first guiding track may exhibit a decreasing width towards the second portion of the first guiding track, to provide for a facilitated mating of the male connection portion and the female connection portion, and to guide the first peripheral protrusion towards the second portion.

The first guiding track may advantageously be configured in such a way that there is a smooth gradual transition from the first portion to the second portion. For instance, at least one edge of the first guiding track may be curved at the transition from the first portion to the second portion.

According to various embodiments, furthermore, the modular energy harvesting device may be provided with two (or more) sets of peripheral protrusions and corresponding guiding tracks to allow insertion of the male connection portion into the female connection portion and locking from several rotational starting positions, for facilitating attachment of the energy storage module to the light-to-electricity converter module. In such embodiments, the modular energy harvesting device may further be provided with additional recesses/protrusions for defining the different rotational positions for different functional states for each peripheral protrusion/guiding track combination. Moreover, the first and second electrical connectors may, for each peripheral protrusion/guiding track combination, be configured to achieve electrical connection between the first connector pin and the first electrode surface, and between the second connector pin and the second electrode surface in the first rotational position, and to electrically disconnect at least the first connector pin from the first electrode surface in the second rotational position.

In the case of two sets of peripheral protrusion and corresponding guiding tracks, one of the male connection portion and the female connection portion may comprise a second peripheral protrusion opposite the first peripheral protrusion in relation to the rotational axis, and the other one of the male connection portion and the female connection portion may comprise a second guiding track, opposite the first guiding track in relation to the rotational axis, for accommodating the second peripheral protrusion.

Furthermore, embodiments of the present invention provide for connecting the energy storage module to another function-providing module to form a functional electrical device, and to switch that function-providing module between different functional states by rotational movement of the energy storage module in relation to the function-providing module, while the energy storage module and the function-providing module are axially locked together. To define the different functional states and to thereby facilitate for the user to switch between the different functional states, the second connection portion comprised in the energy storage module may comprise a first recess for defining a first rotational position of the energy storage module, and a second recess for defining a second rotational position of the energy storage module different from the first rotational position.

The function-providing module may be provided with at least one protrusion arranged and configured to cooperate with the first and second recesses of the energy storage module to achieve distinct "stops" in the relative rotation at the desired first and second relative rotational positions.

This will make it easy for the user to feel when the relative rotations position corresponds to a functional state, and may thus obviate the need for dedicated switches or other moving parts for allowing a user to switch the functional electrical device between different functional states. This, in turn, provides for a more reliable and affordable functional electrical device.

According to various embodiments, furthermore, the energy storage module may further comprise a recessed guiding track connecting the first recess and the second recess for facilitating movement between the first and second rotational positions. The guiding track may follow a curved path with a radius being equal to the distance between the rotational axis (of the relative rotation locking the energy storage module and a function-providing module together) and the first and second recesses. (The first and second recesses are advantageously provided at the same distance from the rotational axis.)

By providing a guiding track between the first and second recesses, it will be easier to rotate from the first rotational position to the second rotational position and back than in the opposite rotational directions (from the first rotational position and further away from the second rotational position, or from the second rotational position and further away from the first rotational position).

To still provide distinct stops at the first and second relative rotational positions, the maximum depth of the guiding track may be made smaller than the maximum depth of each of the first and second recesses. In other words, the guiding track may advantageously be dimensioned in such a way that force exerted by the protrusion is greater in the guiding track than in the first and second recesses, and smaller in the guiding track than adjacent the first and second recesses (but outside the guiding track and the first and second recesses).

In summary, according to various embodiments, the present invention relates to a modular energy harvesting device comprising a light-to-electricity converter module including a light-to-electricity converting device for receiving sunlight and converting the sunlight to electricity, the light-to-electricity converting device defining a light-to-electricity converting device plane. The modular energy harvesting device further comprises an elongated energy storage module having a longitudinal axis. The longitudinal axis of the energy storage module is substantially perpendicular to the light-to-electricity converting device plane of the light-to-electricity converter module when the energy storage module is attached to the light-to-electricity converter module.

### Brief Description of the Drawings

These and other aspects of the present invention will now be described in more detail, with reference to the appended drawings showing an example embodiment of the invention, wherein:
Fig 1 schematically illustrates an example embodiment of the modular energy harvesting device showing attachment of the energy storage module directly to the light-to-electricity converter module;
Figs 2a-b schematically show two different inclinations of the light-to-electricity converting device of the modular energy harvesting device in fig 1;
Fig 3 is an exploded and partly cut-out view of the modular energy harvesting device in fig 1;
Fig 4a is a top view of the female connection portion comprised in the light-to-electricity converter module in fig 3;
Fig 4b is a top view of the male connection portion comprised in the energy storage module in fig 3;
Fig 5 schematically shows axial insertion of the male connection portion into the female connection portion of another function-providing module in the form of a lamp module;
Fig 6 schematically shows a first rotational position in which the energy storage module is attached to the function-providing module in fig 4 and an on-state is defined; and
Fig 7 schematically shows a second rotational position in which the energy storage module is attached to the function-providing module in fig 4 and an off-state is defined.

### Detailed Description of Example Embodiments

In the present detailed description, various embodiments of the modular energy harvesting device according to the present invention are mainly discussed with reference to a modular energy harvesting device in which the energy storage module comprises a male connection portion and the light-to-electricity converter module comprises a female connection portion. Furthermore, one example is described in detail in which a particular configuration of the mechanical and electrical interface between the male connection portion and the female connection portion has been specified.

It should be noted that this by no means limits the scope of the present invention, which equally well includes, for example, a modular energy harvesting device in which the energy storage module comprises a female connection portion and the light-to-electricity converter module comprises a male connection portion. Moreover, one of ordinary skill in the art will realize that the male connection portion may be provided with either a planar electrode pattern or spring-loaded connector pins and *vice versa.*

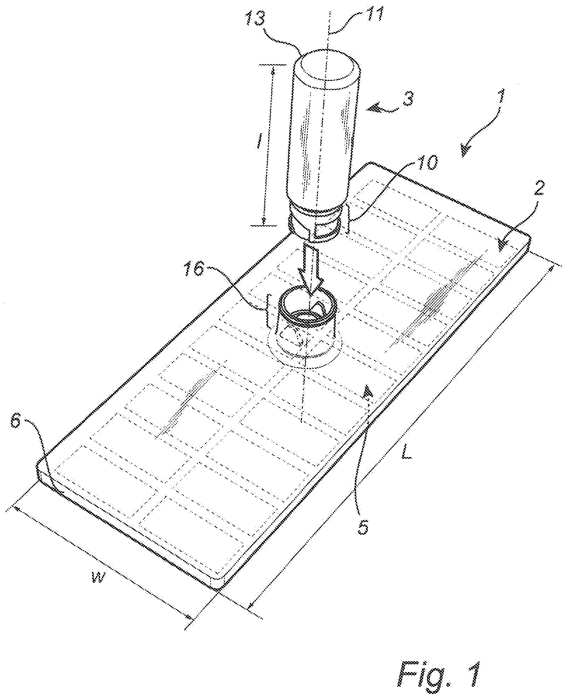

Fig 1 schematically illustrates an example embodiment of the modular energy harvesting device according to the present invention. As is indicated in fig 1, the modular energy harvesting device 1 comprises a light-to-electricity converter module 2, and an energy storage module, here in the form of battery module 3. The light-to-electricity converter module comprises solar cells 5 (schematically indicated by the small dashed rectangles in fig 1), and a housing 6 for accommodating the solar cells 5 as well as electronics (not shown in fig 1) for, where applicable, conditioning the electrical energy output by the solar cells to be suitable for storage in the battery module 3 and for monitoring the state of charge of the battery module 3.

Integral with the housing 6 is formed a first connection portion 16 for allowing releasable mechanical and electrical connection between the light-to-electricity converter module 2 and the energy storage module 3 via the second connection portion 10 included in the energy storage module 3.

As is schematically indicated in fig 1, the energy storage module 3 is elongated and extends along a longitudinal axis 11, and the first connection portion 16 of the light-to-electricity converter module 2 and the second connection portion 10 of the energy storage module 3 are configured in such a way that the longitudinal axis 11 is at least approximatively perpendicular to the light-to-electricity converting device plane when the energy storage module 3 is connected to the light-to-electricity converter module 2.

As is also shown in fig 1, the light-to-electricity converter module 2 is formed as a non-square rectangle with a length L and a width W. When the energy storage module 3 is attached to the light-to-electricity converter module, the distal end 13 of the energy storage module 3 will be spaced apart from the backside of the light-to-electricity converter module by about the length I of the energy storage module 3.

Through the substantially perpendicular extension of the energy storage device 3 from the backside of the light-to-electricity converter module 2, and the non-square rectangular shape of the light-to-electricity converter module 2, the modular energy harvesting device 1 can easily be directed towards the sun in a more efficient way than using energy harvesting devices having a flat backside or a conventional support.

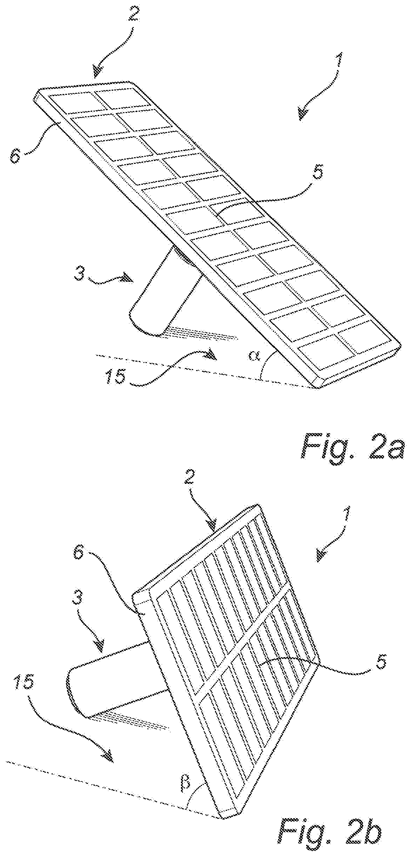

As is schematically shown in figs 2a-b, the rectangular light-to-electricity converter module 2 can be arranged in two different ways to form two different angles a, β in relation to the support surface 15 (for example a table). Referring also to fig 1, α=arcsin(2l/L), and β=arcsin(2l/W).

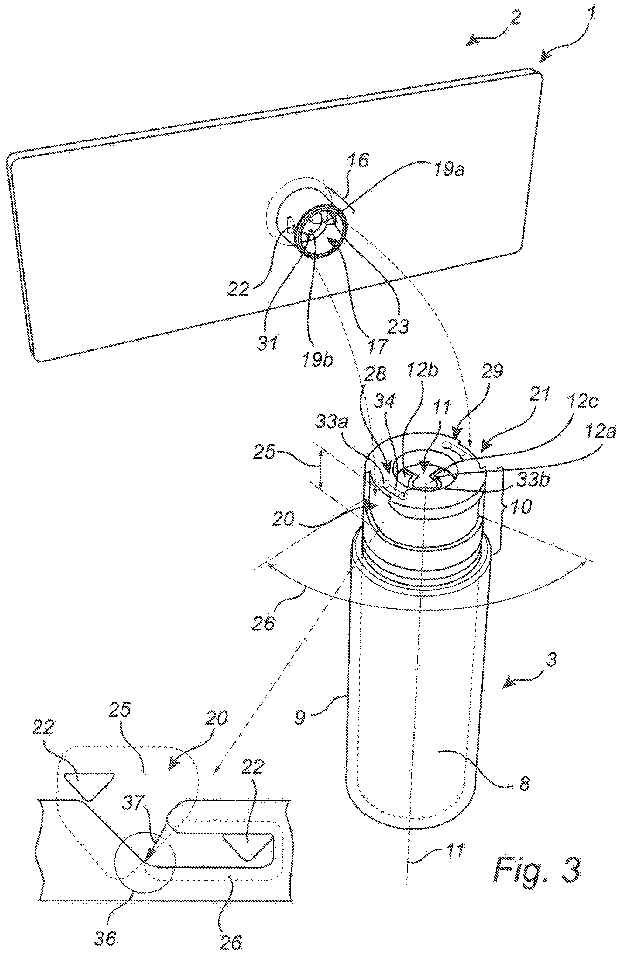

The connection between light-to-electricity converter module 2 and energy storage module 3 will be described in more detail below with reference to fig 3, in which the modular energy harvesting device 1 is shown with the energy storage module (in this case battery module 3) detached from the light-to-electricity converter module 2.

In this view, it can be seen that the battery module 3 comprises a rechargeable battery 8, and a battery housing 9. Integrally formed with the battery housing 9 is the male connection portion 10 comprising a first electrical connector. The first electrical connector comprises a recessed planar conductor pattern with a first 12a, a second 12b, and a third 12c electrode surface. In the example conductor pattern configuration of fig 3, the first electrode surface 12a is connected to one pole of the battery 8, while the second 12b and the third 12c electrode surfaces are both connected to the other pole of the battery 8.

In this context, it should be noted that the electrode surfaces 12a-c are not directly connected to the poles of the battery 8, but that the energy storage module 3 additionally comprises electronic circuitry (not shown in fig 3) performing various functions. Such functions may, for example, include to maintain the current and/or voltage provided by the battery within a predefined range, and to stop transfer of energy from the battery when the state of charge has been reduced to a predefined threshold value.

As mentioned above with reference to fig 1, the light-to-electricity converter module 2 comprises a female connection portion 16 including a first electrical connector 17. The first electrical connector 17 comprises first 19a and second 19b spring-loaded connection pins, which are connected to the solar cells 5 (via electronic circuitry as mentioned further above).

The male connection portion 10 of the battery module 3 and the female connection portion 16 of the light-to-electricity converter module 2 are configured to allow the female connection portion 16 to axially receive the male connection portion 10 and to lock the male connection portion 10 and the female connection portion 16 together through rotation of the battery module 3 in relation to the light-to-electricity converter module 2 about a rotational axis 11.

To provide this twist-lock functionality, the male connection portion 10 comprises first 20 and second 21 guiding tracks, and the female connection portion 16 comprises first 22 and second 23 peripheral protrusions.

Each of the first 20 and second 21 guiding tracks comprises a first guiding track portion 25 and a second guiding track portion 26 (only indicated with reference numerals for the first guiding track 20 in fig 2). As is schematically shown in fig 2, the first guiding track portion 25 is oriented in parallel with the rotational axis and opens up towards the light-to-electricity converter module 2 to facilitate axial insertion of the first 22 and second 23 peripheral protrusions of the male connection portion 10 into the first 20 and second 21 guiding tracks, respectively. The second guiding track portion 26 extends along a part of the periphery of the male connection portion 10 and is oriented perpendicular to the rotational axis 11 to lock the respective one of the first 22 and second 23 peripheral protrusions, to prevent axial movement of the light-to-electricity converter module 2 in relation to the battery module 3 when the peripheral protrusions have entered the second guiding track portions of their respective guiding tracks.

As is schematically indicated in fig 3, each of the first 22 and second 23 peripheral protrusions is shaped as a triangle with one altitude of the triangle being substantially parallel with the rotational axis 11. This facilitates insertion of the peripheral protrusions into the corresponding guiding tracks. Advantageously, the peripheral protrusions and the corresponding first guiding track portions may be adapted to each other in such a way that sides of the triangular peripheral protrusion facing the first guiding track portion are substantially parallel to the guiding surfaces of the first guiding track portion.

Furthermore, as is shown in greater detail in the enlarged view in fig 3, the above-mentioned first 25 and second 26 guiding track portions are not abruptly connected, but the angle of the first guiding track portion 25 gradually transitions to the angle of the second guiding track portion 26, so that there is a transition zone 36 between the first 25 and second 26 guiding track portions that is curved with a radius of curvature 37 that is sufficiently great to allow the peripheral protrusion 22 to smoothly slide from the first 25 to the second guiding track portion. In the enlarged portion of fig 3, the peripheral protrusion 22 is shown just before insertion into the guiding track 20 and at its end position when the male connection portion 10 and the female connection portion 16 are locked together.

Through the provision of the above-described first 20 and second 21 guiding tracks of the male connection portion 10, and first 22 and second 23 peripheral protrusions of the female connection portion 16, there are two symmetrical relative rotational positions allowing insertion of the male connection portion 10 into the female connection portion 16.

In addition to what has been described above, the male connection portion 10 comprises two sets of rotation guiding structures, in the form of first 28 and second 29 recess arrangements.

The female connection portion 16 comprises a corresponding rotation guiding structure, in the form of an axial protrusion 31. The axial protrusion 31 is arranged to interact with either the first 28 recess arrangement or the second 29 recess arrangement depending on how the male connection portion 10 is inserted into the female connection portion 16.

The first 28 and second 29 recess arrangements are identical, and each comprise a first axial recess 33a, a second axial recess 33b, and a recessed guiding track 34 connecting the first 33a and second 33b axial recesses. The first 33a and second 33b axial recesses are deeper than the recessed guiding track 34.

Through the relative positioning and configuration of the electrode surfaces 12a-c, the recess arrangements 28-29, the connector pins 19a-b, the axial protrusion 31, the guiding tracks 20-21, and the peripheral protrusions 22-23, two rotational positions are defined which may allow a user to switch between functional states by rotating the battery module 3. This will be described in greater detail below.

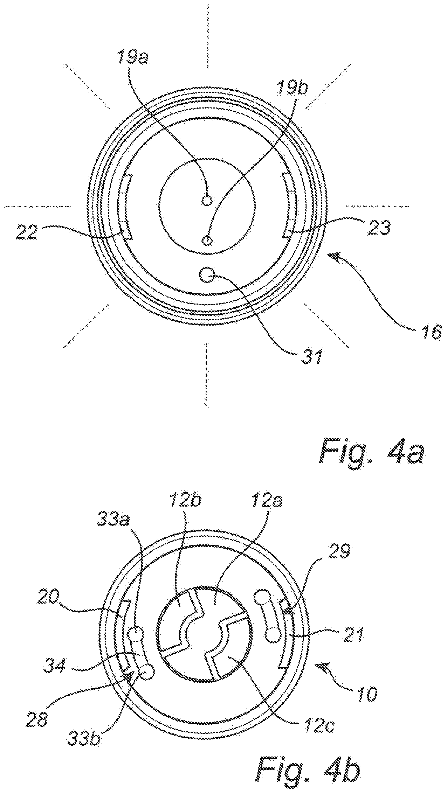

Figs 4a-b are plane views of the male 10 and female 16 connection portions for providing a clearer view of some of the features described above in connection with fig 3.

In embodiments of the present invention, the modular energy harvesting device 1 can be separated into the light-to-electricity converter module 2 and the energy storage module 3, so that the energy storage module 3 can be connected to another function-providing module to form another functional electrical device providing another electrical function.

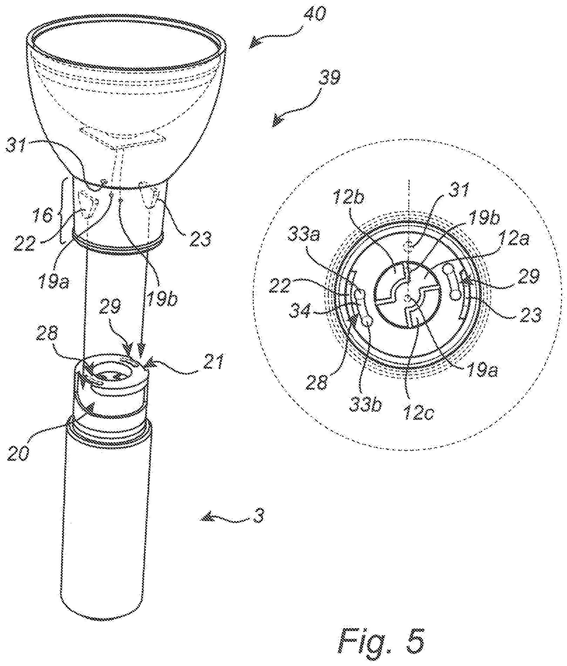

An example of how another functional electrical device, here in the form of a lamp 39, can be formed and operated using the energy storage module 3 in fig 3 and a lamp module 40 will now be provided with reference to figs 5-7 showing different rotational positions of the battery module 3 in relation to lamp module 40. To avoid cluttering the drawings, only selected features are shown and/or indicated with reference numerals. Furthermore, each of figs 5-7 includes a perspective view of the lamp 39 and a top view in which the lamp module 40 has been made transparent and outlines of the lamp module 40 are shown as dashed lines to indicate relative rotational positions of features of the male connection portion 10 in relation to corresponding features of the female connection portion 16.

Referring first to fig 5, the lamp 39 is shown in one of the two rotational positions allowing axial insertion of the male connection portion 10 into the female connection portion 16. From the rotational position in fig 5, the battery module 3 and the lamp module 40 can be mechanically attached to each other by rotating the lamp module 40 and the battery module 3 in relation to each other.

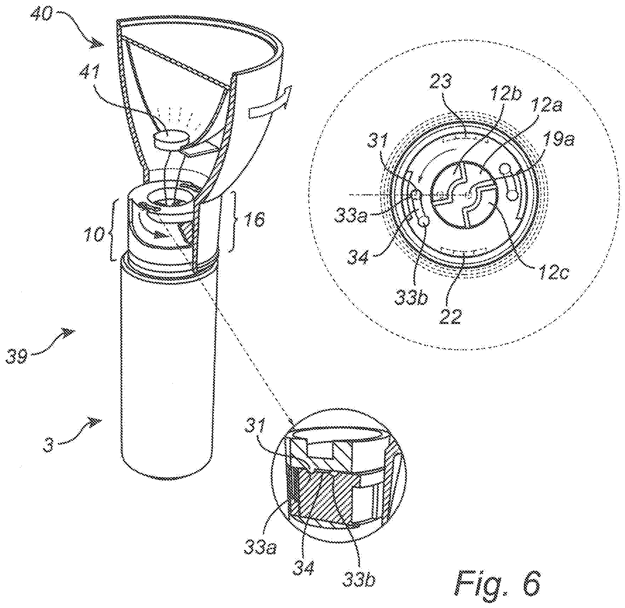

In fig 6, the lamp module 40 has been rotated counter clock-wise in relation to the battery module 3 until the axial protrusion 31 of the female connection portion 16 springs into the first axial recess 33a of the first recess arrangement 28 of the male connection portion 10. To a user, this is perceived as a distinct stop in the rotation, and defines a first rotational position in which the first connector pin 19a is connected to the first electrode surface 12a, and the second connector pin 19b is connected to the second electrode surface 12b. In this first rotational position, the light-source 41 comprised in the lamp module 40 is provided with electrical energy from the battery and lights up.

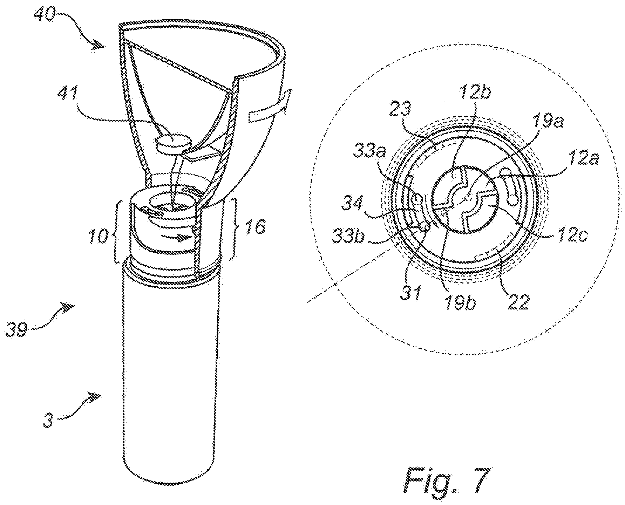

In fig 7, the lamp module 40 has been rotated further counter clock-wise in relation to the battery module 3 until the axial protrusion 31 of the female connection portion 16 springs into the second axial recess 33b of the first recess arrangement 28 of the male connection portion 10. To a user, this is perceived as a distinct stop in the rotation, and defines a second rotational position in which both the first connector pin 19a and the second connector pin 19b are connected to the first electrode surface 12a. In this first rotational position, the light-source 41 is not provided with electrical energy from the battery and the lamp 39 is thus switched off.

## Claims

1. A modular energy harvesting device (1) comprising:
a light-to-electricity converter module (2) including:
a light-to-electricity converting device (5) for receiving sunlight and converting the sunlight to electricity, said light-to-electricity converting device defining a light-to-electricity converting device plane; and
a first connection portion (16) comprising a first electrical connector (17) being electrically connected to said light-to-electricity converting device to allow flow of electrical current from said light-to-electricity converting device via the first electrical connector; and
an elongated cylindrical energy storage module (3) having a longitudinal axis, said energy storage module including:
an energy storage device for storing electrical energy; and
a second connection portion (10) for releasable mechanical and electrical connection to the first connection portion (16) of said light-to-electricity converter module, said second connection portion comprising a second electrical connector (11) being electrically connected to said energy storage device to allow flow of electrical current from the light-to-electricity converting device of said light-to-electricity converter module (2) to said energy storage device by means of electrical connection formed between the first electrical connector (17) of said light-to-electricity converter module (2) and the second electrical connector (11) of said energy storage module (3),
wherein the first connection portion (16) of said light-to-electricity converter module and the second connection portion (10) of said energy storage module are configured in such a way that the longitudinal axis of said energy storage module is perpendicular to the light-to-electricity converting device plane of said light-to-electricity converter module when said energy storage module (3) is attached to said light-to-electricity converter module (2).

2. The modular energy harvesting device (1) according to claim 1, wherein:
one of the first connection portion (16) comprised in said light-to-electricity converter module, and the second connection portion (10) comprised in said energy storage module is a male connection portion and the other one of the first connection portion comprised in said light-to-electricity converter module, and the second connection portion comprised in said energy storage module is a female connection portion; and
the male connection portion and the female connection portion are configured to allow the female connection portion to axially receive the male connection portion and to lock the male connection portion and the female connection portion together through rotation of the energy storage module in relation to the light-to-electricity converter module.

3. The modular energy harvesting device (1) according to claim 2, wherein:
one of said first electrical connector (17) and said second electrical connector (11) comprises a planar conductor pattern formed by at least a first electrode surface (12a) and a second electrode surface (12b) electrically separated from the first electrode surface, and the other one of said first electrical connector and said second electrical connector comprises a first (19a) and a second (19b) spring-loaded connector pin; and
the male connection portion (10) and the female connection portion (16) are configured in such a way that the rotation to lock the male connection portion and the female connection portion together results in said first connector pin (19a) being in electrical connection with said first electrode surface (12a), and said second connector pin (19b) being in electrical connection with said second electrode surface (12b).

4. The modular energy harvesting device (1) according to claim 3,
wherein the male connection portion (10) comprises said planar conductor pattern (12a-c), and the female connection portion (16) comprises said first and second spring loaded pins (19a-b).

5. The modular energy harvesting device (1) according to claim 3 or 4, wherein said planar conductor pattern (12a-c) is recessed.

6. The modular energy harvesting device (1) according to any one of claims 2 to 5, wherein said male connection portion (10) is substantially cylindrical.

7. The modular energy harvesting device (1) according to any one of claims 2 to 6, wherein the male connection portion (10) is comprised in said energy storage module (3), and the female connection portion (16) is comprised in said light-to-electricity converter module (2).

8. The modular energy harvesting device (1) according to any one of claims, 2 to 7 wherein one of the male connection portion (10) and the female connection portion (16) comprises at least a first peripheral protrusion (22, 23) and the other one of the male connection portion and the female connection portion comprises at least a first guiding track (20, 21) for accommodating said first peripheral protrusion and defining a possible relative movement between the male connection portion and the female connection portion, at least comprising rotation around a rotational axis for locking the male connection portion and the female connection portion together.

9. The modular energy harvesting device (1) according to claim 8, wherein said first peripheral protrusion (22) is shaped as a triangle with one altitude of said triangle being substantially parallel with said rotational axis.

10. The modular energy harvesting device (1) according to claim 8 or 9, wherein said first guiding track comprises a first portion (25) oriented in parallel with said rotational axis, and a second portion (26) oriented perpendicular to said rotational axis.

11. The modular energy harvesting device (1) according to claim 10, wherein the first portion (25) of said first guiding track exhibits a decreasing width towards the second portion of said first guiding track, to provide for a facilitated mating of said male connection portion and said female connection portion, and to guide said first peripheral protrusion (22) towards the second portion.

12. The modular energy harvesting device (1) according to any one of claims 8 to 11, wherein one of the male connection portion and the female connection portion comprises a second peripheral protrusion (23) opposite said first peripheral protrusion in relation to said rotational axis, and the other one of the male connection portion and the female connection portion comprises a second guiding track (21), opposite said first guiding track in relation to said rotational axis, for accommodating said second peripheral protrusion.

13. The modular energy harvesting device (1) according to any one of claims 3 to 12,
wherein the second connection portion (10) comprised in said energy storage module comprises a first recess (33a) for defining a first rotational position of the energy storage module, and a second recess (33b) for defining a second rotational position of the energy storage module different from the first rotational position.

14. The modular energy harvesting device (1) according to claim 13, wherein the second connection portion (10) comprised in said energy storage module further comprises a recessed guiding track (34) connecting said first recess (33a) and said second recess (33b) for facilitating movement between said first and second rotational positions.

## Patentansprüche

1. Modulare Energiegewinnungsvorrichtung (1), umfassend:
ein Licht-Strom-Wandlermodul (2), aufweisend:
eine Licht-Strom-Wandlervorrichtung (5) zur Aufnahme von Sonnenlicht und Umwandlung des Sonnenlichts in Strom, wobei die Licht-Strom-Wandlervorrichtung eine Licht-Strom-Wandlervorrichtungsebene definiert; und
einen ersten Verbindungsabschnitt (16), der einen ersten elektrischen Steckverbinder (17) umfasst, der mit der Licht-Strom-Wandlervorrichtung elektrisch verbunden ist, um einen Stromfluss von der Licht-Strom-Wandlervorrichtung über den ersten elektrischen Steckverbinder zu ermöglichen; und
ein längliches zylindrisches Energiespeichermodul (3), das eine Längsachse aufweist, wobei das Energiespeichermodul aufweist:
eine Energiespeichervorrichtung zum Speichern elektrischer Energie; und
einen zweiten Verbindungsabschnitt (10) zur lösbaren mechanischen und elektrischen Verbindung mit dem ersten Verbindungsabschnitt (16) des Licht-Strom-Wandlermoduls, wobei der zweite Verbindungsabschnitt einen zweiten elektrischen Steckverbinder (11) umfasst, der mit der Energiespeichervorrichtung elektrisch verbunden ist, um einen Stromfluss von der Licht-Strom-Wandlervorrichtung des Licht-Strom-Wandlermoduls (2) zu der Energiespeichervorrichtung mittels einer elektrischen Verbindung, die zwischen dem ersten elektrischen Steckverbinder (17) des Licht-Strom-Wandlermoduls (2) und dem zweiten elektrischen Steckverbinder (11) des Energiespeichermoduls (3) ausgebildet ist, zu ermöglichen,
wobei der erste Verbindungsabschnitt (16) des Licht-Strom-Wandlermoduls und der zweite Verbindungsabschnitt (10) des Energiespeichermoduls derart ausgestaltet sind, dass die Längsachse des Energiespeichermoduls im Wesentlichen senkrecht zur Licht-Strom-Wandlervorrichtungsebene des Licht-Strom-Wandlermoduls verläuft, wenn das Energiespeichermodul (3) an das Licht-Strom-Wandlermodul (2) angeschlossen ist.

2. Modulare Energiegewinnungsvorrichtung (1) nach Anspruch 1, wobei:
einer von dem ersten Verbindungsabschnitt (16), der in dem Licht-Strom-Wandlermodul umfasst ist, und dem zweiten Verbindungsabschnitt (10), der in dem Energiespeichermodul umfasst ist, ein männlicher Verbindungsabschnitt ist und der andere von dem ersten Verbindungsabschnitt, der in dem Licht-Strom-Wandlermodul umfasst ist, und der zweite Verbindungsabschnitt, der in dem Energiespeichermodul umfasst ist, ein weiblicher Verbindungsabschnitt ist; und
der männliche Verbindungsabschnitt und der weibliche Verbindungsabschnitt so ausgestaltet sind, dass der weibliche Verbindungsabschnitt den männlichen Verbindungsabschnitt axial aufnehmen und den männlichen Verbindungsabschnitt und den weiblichen Verbindungsabschnitt durch Drehen des Energiespeichermoduls in Bezug auf das Licht-Strom-Wandlermodul miteinander verriegeln kann.

3. Modulare Energiegewinnungsvorrichtung (1) nach Anspruch 2, wobei:
einer von dem ersten elektrischen Steckverbinder (17) und dem zweiten elektrischen Steckverbinder (11) ein planares Leitermuster umfasst, das durch mindestens eine erste Elektrodenfläche (12a) und eine zweite Elektrodenfläche (12b), die von der ersten Elektrodenfläche elektrisch abgetrennt ist, gebildet ist, und der andere von dem ersten elektrischen Steckverbinder und dem zweiten elektrischen Steckverbinder einen ersten (19a) und einen zweiten (19b) federbelasteten Verbindungsstift umfasst; und
der männliche Verbindungsabschnitt (10) und der weibliche Verbindungsabschnitt (16) derartig ausgestaltet sind, dass die Drehung zum Verriegeln des männlichen Verbindungsabschnitts und des weiblichen Verbindungsabschnitts miteinander dazu führt, dass der erste Verbindungsstift (19a) in elektrischer Verbindung mit der ersten Elektrodenfläche (12a) steht und der zweite Verbindungsstift (19b) in elektrischer Verbindung mit der zweiten Elektrodenfläche (12b) steht.

4. Modulare Energiegewinnungsvorrichtung (1) nach Anspruch 3, wobei der männliche Verbindungsabschnitt (10) ein planares Leitermuster (12a-c) umfasst und der weibliche Verbindungsabschnitt (16) den ersten und zweiten federbelasteten Stift (19a-b) umfasst.

5. Modulare Energiegewinnungsvorrichtung (1) nach Anspruch 3 oder 4, wobei das planare Leitermuster (12a-c) eingelassen ist.

6. Modulare Energiegewinnungsvorrichtung (1) nach einem der Ansprüche 2 bis 5, wobei der männliche Verbindungsabschnitt (10) im Wesentlichen zylindrisch ist.

7. Modulare Energiegewinnungsvorrichtung (1) nach einem der Ansprüche 2 bis 6, wobei der männliche Verbindungsabschnitt (10) in dem Energiespeichermodul (3) umfasst ist und der weibliche Verbindungsabschnitt (16) in dem Licht-Strom-Wandlermodul (2) umfasst ist.

8. Modulare Energiegewinnungsvorrichtung (1) nach einem der Ansprüche 2 bis 7, wobei einer von dem männlichen Verbindungsabschnitt (10) und dem weiblichen Verbindungsabschnitt (16) mindestens einen peripheren Vorsprung (22, 23) umfasst und der andere von dem männlichen Verbindungsabschnitt und dem weiblichen Verbindungsabschnitt mindestens eine erste Führungsbahn (20, 21) zum Aufnehmen des ersten peripheren Vorsprungs und zum Definieren einer möglichen Relativbewegung zwischen dem männlichen Verbindungsabschnitt und dem weiblichen Verbindungsabschnitt umfasst, die mindestens eine Drehung um eine Drehachse zum Verriegeln des männlichen Verbindungsabschnitts und des weiblichen Verbindungsabschnitts miteinander umfasst.

9. Modulare Energiegewinnungsvorrichtung (1) nach Anspruch 8, wobei der erste periphere Vorsprung (22) als ein Dreieck geformt ist, wobei eine Höhe des Dreiecks im Wesentlichen parallel zur Drehachse verläuft.

10. Modulare Energiegewinnungsvorrichtung (1) nach Anspruch 8 oder 9, wobei die erste Führungsbahn einen ersten Abschnitt (25), der parallel zur Drehachse ausgerichtet ist, und einen zweiten Abschnitt (26), der senkrecht zur Drehachse ausgerichtet ist, umfasst.

11. Modulare Energiegewinnungsvorrichtung (1) nach Anspruch 10, wobei der erste Abschnitt (25) der ersten Führungsbahn eine zum zweiten Abschnitt der ersten Führungsbahn hin abnehmende Breite aufweist, um ein erleichtertes Zusammenfügen des männlichen Verbindungsabschnitts und des weiblichen Verbindungsabschnitts zu ermöglichen und um den ersten peripheren Vorsprung (22) zum zweiten Abschnitt hin zu führen.

12. Modulare Energiegewinnungsvorrichtung (1) nach einem der Ansprüche 8 bis 11, wobei einer von dem männlichen Verbindungsabschnitt und dem weiblichen Verbindungsabschnitt einen zweiten peripheren Vorsprung (23) gegenüber dem ersten peripheren Vorsprung in Bezug auf die Drehachse umfasst, und der andere von dem männlichen Verbindungsabschnitt und dem weiblichen Verbindungsabschnitt eine zweite Führungsbahn (21) gegenüber der ersten Führungsbahn in Bezug auf die Drehachse zur Aufnahme des zweiten peripheren Vorsprungs umfasst.

13. Modulare Energiegewinnungsvorrichtung (1) nach einem der Ansprüche 3 bis 12,
wobei der zweite Verbindungsabschnitt (10), der in dem Energiespeichermodul umfasst ist, eine erste Vertiefung (33a) zum Definieren einer ersten Drehposition des Energiespeichermoduls, und eine zweite Vertiefung (33b) zum Definieren einer zweiten Drehposition des Energiespeichermoduls, die sich von der ersten Drehposition unterscheidet, umfasst.

14. Modulare Energiegewinnungsvorrichtung (1) nach Anspruch 13, wobei der zweite Verbindungsabschnitt (10), der in dem Energiespeichermodul umfasst ist, ferner eine eingelassene Führungsbahn (34) umfasst, die die erste Vertiefung (33a) und die zweite Vertiefung (33b) verbindet, um eine Bewegung zwischen der ersten und zweiten Drehposition zu erleichtern.

## Revendications

1. Dispositif modulaire de collecte d'énergie (1) comprenant :
un module convertisseur de lumière en électricité (2) comportant :
un dispositif de conversion de lumière en électricité (5) pour recevoir la lumière solaire et la convertir en électricité, ledit dispositif de conversion de lumière en électricité définissant un plan de dispositif de conversion de lumière en électricité ; et
une première portion de connexion (16) comprenant un premier connecteur électrique (17) connecté électriquement audit dispositif de conversion de lumière en électricité pour permettre l'écoulement d'un courant électrique provenant dudit dispositif de conversion de lumière en électricité via le premier connecteur électrique ; et
un module de stockage d'énergie cylindrique allongé (3) présentant un axe longitudinal, ledit module de stockage d'énergie comprenant :
un dispositif de stockage d'énergie pour stocker de l'énergie électrique ; et
une deuxième portion de connexion (10) pour établir une connexion mécanique et électrique largable à la première portion de connexion (16) dudit module convertisseur de lumière en électricité, ladite deuxième portion de connexion comprenant un deuxième connecteur électrique (11) connecté électriquement audit dispositif de stockage d'énergie pour permettre l'écoulement d'un courant électrique du dispositif de conversion de lumière en électricité dudit module convertisseur de lumière en électricité (2) audit dispositif de stockage d'énergie au moyen d'une connexion électrique constituée entre le premier connecteur électrique (17) dudit module convertisseur de lumière en électricité (2) et le deuxième connecteur électrique (11) dudit module de stockage d'énergie (3),
dans lequel la première portion de connexion (16) dudit module convertisseur de lumière en électricité et la deuxième portion de connexion (10) dudit module de stockage d'énergie sont configurées de telle sorte que l'axe longitudinal dudit module de stockage d'énergie est perpendiculaire au plan du dispositif de conversion de lumière en électricité dudit module convertisseur de lumière en électricité quand ledit module de stockage d'énergie (3) est attaché audit module convertisseur de lumière en électricité (2).

2. Dispositif modulaire de collecte d'énergie (1) selon la revendication 1, dans lequel :
une portion parmi la première portion de connexion (16) comprise dans ledit module convertisseur de lumière en électricité et la deuxième portion de connexion (10) comprise dans ledit module de stockage d'énergie est une portion de connexion mâle et l'autre portion parmi la première portion de connexion comprise dans ledit module convertisseur de lumière en électricité et la deuxième portion de connexion comprise dans ledit module de stockage d'énergie est une portion de connexion femelle ; et
la portion de connexion mâle et la portion de connexion femelle sont configurées pour permettre à la portion de connexion femelle de recevoir axialement la portion de connexion mâle, et pour verrouiller la portion de connexion mâle et la portion de connexion femelle entre elles par rotation du module de stockage d'énergie par rapport au module convertisseur de lumière en électricité.

3. Dispositif modulaire de collecte d'énergie (1) selon la revendication 2, dans lequel :
un connecteur parmi ledit premier connecteur électrique (17) et ledit deuxième connecteur électrique (11) comprend un motif conducteur planaire formé par au moins une première surface d'électrode (12a) et une deuxième surface d'électrode (12b) séparée électriquement de la première surface d'électrode, et l'autre connecteur parmi ledit premier connecteur électrique et ledit deuxième connecteur électrique comprend des première (19a) et deuxième (19b) broches de connecteur à ressort ; et
la portion de connexion mâle (10) et la portion de connexion femelle (16) sont configurées de telle sorte que la rotation pour verrouiller la portion de connexion mâle et la portion de connexion femelle entre elles résulte en ce que ladite première broche de connecteur (19a) établit une connexion électrique avec ladite première surface d'électrode (12a), et ladite deuxième broche de connecteur (19b) établit une connexion électrique avec ladite deuxième surface d'électrode (12b).

4. Dispositif modulaire de collecte d'énergie (1) selon la revendication 3, dans lequel la portion de connexion mâle (10) comprend ledit motif conducteur planaire (12a-c), et la portion de connexion femelle (16) comprend lesdites première et deuxième broches à ressort (19a-b).

5. Dispositif modulaire de collecte d'énergie (1) selon la revendication 3 ou 4, dans lequel ledit motif conducteur planaire (12a-c) est renfoncé.

6. Dispositif modulaire de collecte d'énergie (1) selon l'une quelconque des revendications 2 à 5, dans lequel ladite portion de connexion mâle (10) est substantiellement cylindrique.

7. Dispositif modulaire de collecte d'énergie (1) selon l'une quelconque des revendications 2 à 6, dans lequel la portion de connexion mâle (10) est comprise dans ledit module de stockage d'énergie (3), et la portion de connexion femelle (16) est comprise dans ledit module convertisseur de lumière en électricité (2).

8. Dispositif modulaire de collecte d'énergie (1) selon l'une quelconque des revendications 2 à 7, dans lequel une portion parmi la portion de connexion mâle (10) et la portion de connexion femelle (16) comprend au moins une première protubérance périphérique (22, 23), et l'autre portion parmi la portion de connexion mâle et la portion de connexion femelle comprend au moins une première rainure de guidage (20, 21) pour recevoir ladite première protubérance périphérique et définir un déplacement relatif possible entre la portion de connexion mâle et la portion de connexion femelle, comprenant au moins une rotation autour d'un axe de rotation pour verrouiller entre elles la portion de connexion mâle et la portion de connexion femelle.

9. Dispositif modulaire de collecte d'énergie (1) selon la revendication 8, dans lequel ladite première protubérance périphérique (22) est conformée comme un triangle avec une altitude dudit triangle substantiellement parallèle audit axe de rotation.

10. Dispositif modulaire de collecte d'énergie (1) selon la revendication 8 ou 9, dans lequel ladite première rainure de guidage comprend une première portion (25) orientée parallèlement audit axe de rotation, et une deuxième portion (26) orientée perpendiculairement audit axe de rotation.

11. Dispositif modulaire de collecte d'énergie (1) selon la revendication 10, dans lequel la première portion (25) de ladite première rainure de guidage présente une largeur décroissante vers la deuxième portion de ladite première rainure de guidage, pour procurer un accouplement facilité de ladite portion de connexion mâle et de ladite portion de connexion femelle, et pour guider ladite première protubérance périphérique (22) vers la deuxième portion.

12. Dispositif modulaire de collecte d'énergie (1) selon l'une quelconque des revendications 8 à 11, dans lequel une portion parmi la portion de connexion mâle et la portion de connexion femelle comprend une deuxième protubérance périphérique (23) opposée à ladite première protubérance périphérique par rapport audit axe de rotation, et l'autre portion parmi la portion de connexion mâle et la portion de connexion femelle comprend une deuxième rainure de guidage (21), opposée à ladite première rainure de guidage par rapport audit axe de rotation, pour recevoir ladite deuxième protubérance périphérique.

13. Dispositif modulaire de collecte d'énergie (1) selon l'une quelconque des revendications 3 à 12, dans lequel la deuxième portion de connexion (10) comprise dans ledit module de stockage d'énergie comprend un premier renfoncement (33a) pour définir une première position de rotation du module de stockage d'énergie, et un deuxième renfoncement (33b) pour définir une deuxième position de rotation du module de stockage d'énergie différente de la première position de rotation.

14. Dispositif modulaire de collecte d'énergie (1) selon la revendication 13, dans lequel la deuxième portion de connexion (10) comprise dans ledit module de stockage d'énergie comprend en outre une rainure de guidage renfoncée (34) qui connecte ledit premier renfoncement (33a) et ledit deuxième renfoncement (33b) pour faciliter un déplacement entre lesdites première et deuxième positions de rotation.
